(19) Europäisches Patentamt
European Patent Office
Office européen des brevets

(11) **EP 2 312 516 A1**

(12) **EUROPEAN PATENT APPLICATION**

(43) Date of publication:
**20.04.2011 Bulletin 2011/16**

(51) Int Cl.:
***G06Q 30/00*** *(2006.01)*

(21) Application number: **09382209.6**

(22) Date of filing: **15.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Telefónica, S.A.**
**28013 Madrid (ES)**

(72) Inventors:
• **Amatriain, Xavier**
**28013, Madrid (ES)**

• **Pujol, Josep, M.**
**28013, Madrid (ES)**
• **Oliver, Nuria**
**28013, Madrid (ES)**
• **Tintarew, Nava**
**28013, Madrid (ES)**

(74) Representative: **Carpintero Lopez, Francisco et al**
**Herrero & Asociados, S.L.**
**Alcalá 35**
**28014 Madrid (ES)**

(54) **Denoising explicit feedback for recommender systems**

(57) A method and system are described of removing noise from a dataset of user ratings for items, the dataset being usable for recommending items that may be of interest to users. The method comprises the following steps:
- for at least some of the items previously rated by a user with an original user rating, obtaining one or more user re-ratings of the user (110); and
- determining a denoised user rating for an item based on a set of user ratings provided by the user for the item (150), the set comprising the one or more user re-ratings and the original user rating.

FIG. 1

EP 2 312 516 A1

**Description**

BACKGROUND OF THE INVENTION

TECHNICAL FIELD

The present invention relates to the field of recommender systems and more specifically to the provision of a dataset of explicit user ratings for items, which dataset is to be used by recommender systems.

DESCRIPTION OF RELATED ART

The goal of recommender systems is to model the users' tastes (preferences) in order to suggest (recommend) items, such as content, that are unknown to a user and that the users would find of interest, see the paper by G. Adomavicius and A. Tuzhilin, "Toward the next generation of recommender systems: A survey of the state-of-the-art and possible extensions", IEEE Trans. on Knowledge and Data Engineering, 17(6):734-749, 2005.
Recommender systems are becoming ubiquitous. They have become an important research area because of the abundance of practical applications that help users to deal with information overload and provide personalized recommendations, content, and services to them. Examples of such applications include recommending books, CDs, films, TV-programs, etc. Some Internet vendors have incorporated recommendation capabilities into their servers.
A typical recommender system usually uses three steps to provide a recommendation.
In a first step, the users of the system provide information about their tastes. This can be done implicitly or explicitly. User preferences are captured implicitly by observing user actions or consumption patterns, as explained in D. W. Oard and J. Kim, "Implicit feedback for recommender systems", in AAAI Works. on Rec. Sys., 1998. Users preferences may be provided explicitly by asking users to rate certain items. The preferred method for capturing explicit preference information from users consists of rating questionnaires, where users are asked to provide feedback -via a value point on a fixed scale - on how much they like certain items. Typically, scales range from 0 or 1 to 5 or 10 and are quantized to integer values. Although explicit feedback adds a burden on the users, and different users might respond differently to incentives, as discussed in more detail in the paper by M. Harper, X. Li, Y. Chen, and J. Konstan, "An economic model of user rating in an online recommender system", in Proc. of UM 05, 2005, it is commonly used because it respects user integrity, allows for greater transparency and is more reliable than implicit feedback data in many cases.
In a second step, the explicit or implicit feedback information of users is used to compute user profiles.
In a third step, the recommender system makes recommendations based on these user profiles by estimating ratings for items that are unknown to a user.
Recommender systems are usually classified according to their approach to rating estimation into three categories.
A first category of recommender systems provides content-based recommendations. The user is recommended items similar to the ones that the user preferred in the past. The utility $u(c,s)$ of an item s for a user $c$ is estimated based on the utilities $u(c,s_i)$ assigned by user $c$ to items $s_i \in S$ that are "similar" to item $s$.
A second category of recommender systems provides collaborative recommendations (this is also referred to by the term "collaborative filtering", CF). The user is recommended items that people with similar tastes and preferences liked in the past. In this case, the recommender systems predicts the utility of items for a particular user based on the items previously rated by other users. CF techniques have proven to be a vital component of many recommender systems as they facilitate the generation of high-quality recommendations by leveraging the preferences of communities of similar users and they are the current mainstream approach used to build web-based recommender systems. More formally, in CF the utility $u(c,s)$ of an item s for a user $c$ is estimated based on the *utilities $u(c_j,s)$* assigned to item $s$ by those users $c_j \in C$ who are "similar" to user $c$.
A third category of recommender systems uses hybrid approaches, i.e. such systems combine collaborative and content-based methods.
Recommender systems based on explicit user feedback are built under the assumption that user ratings constitute the ground truth about the users' likes and dislikes. However, little attention has been paid to how consistent users are in giving these ratings. Great efforts are being invested in finding better recommendation algorithms that achieve relatively limited reductions of the Root Mean Square Error (RMSE) in predicting user ratings, as discussed in the paper by J. Bennet and S. Lanning, "The netflix prize", in Proc. of KDD Work. on Large-scale Rec.. Sys., 2007. However, similar improvements can be obtained by improving the quality of the feedback data of the users. The paper by X. Amatriain, J. Pujol, and N. Oliver, "I like it... i like it not: Evaluating user ratings noise in recommender systems," in Proc. of UMAP'09, 2009 reports on a study designed to capture user inconsistencies when giving explicit feedback in the form of movie ratings. The goal is to characterize the user input (natural) noise and to analyze the impact that this noise has on the so-called "magic barrier" defined in the paper by J. L. Herlocker, J. A. Konstan, L. G. Terveen, and J.

T. Riedl, "Evaluating collaborative filtering recommender systems", ACM Trans. on Inf. Syst., 22(1):5-53, 2004. The magic barrier is the asymptotic limit on accuracy improvements for all recommendation techniques, regardless of how fine-tuned they are.

So, although a common approach to designing recommender systems consists of asking users to explicitly rate items in order to collect feedback about their preferences, users have been shown to be inconsistent and to introduce a non-negligible amount of "natural noise" in their ratings that affects the accuracy and quality of the predictions. The inconsistency in the user ratings may be both in the form of careless ratings as discussed in the paper by M. Mahony, N. Hurley, and G. Silvestre, "Detecting noise in recommender system databases", in Proceedings of the 2006 IUI, 2006 and malicious entries as discussed in the papers by J. Ford S. Zhang, Y. Ouyang and F. Makedon, "Analysis of a low-dimensional linear model under recommendation attacks", in Proc. of SIGIR '06, 2006 and by B. Mehta and W. Nejdl, "Attack resistant collaborative filtering", in Proc. of SIGIR '08, 2008.

As discussed in the paper earlier referred to by X. Amatriain, J. Pujol, and N. Oliver, "I like it... i like it not: Evaluating user ratings noise in recommender systems", a significant part of the error in explicit feedback-based CF algorithms is due to the noise in the users' explicit feedback.

## SUMMARY OF THE INVENTION

It would be advantageous to provide a method and a system for improving the quality of the explicit feedback data provided by users and used by recommending systems.

To better address this concern, according to an aspect of the invention a method is provided of removing noise from a dataset of user ratings for items, the dataset being usable for recommending items that may be of interest to users, the method comprising the following steps:

- for at least some of the items previously rated by a user with an original user rating, obtaining one or more user re-ratings of the user; and
- determining a denoised user rating for an item based on (the values of) a set of user ratings provided by the user for the item, the set comprising the one or more user re-ratings and the original user rating.

So, at least some of the natural noise present in the original dataset of user ratings is removed by means of re-rating -- i.e. by asking users to rate previously rated items, again. It has turned out that this "denoising step" yields significant accuracy improvements of standard Collaborative Filtering recommendation algorithms.

According to an embodiment of the invention, one of the user ratings from the set of user ratings provided by the user for an item is selected as the denoised user rating for said item. So, according to this embodiment the method does not create new values of user ratings but rather decides on which of the existing user ratings to trust. Although, in principle it is possible to create a new value for the user ratings, for example, the average value of all user ratings in the set of ratings for an item (i.e. the original user rating and one or more user re-ratings) it is preferred to select one of these ratings. In this way, maximum information of the original dataset is retained in the denoising process. This has turned out to be advantageous.

According to a further embodiment of the invention, the method comprises the further steps of:

- determining a disagreement condition of the set of user ratings for an item,
- if there is a strong disagreement condition between the user ratings of the set, refraining from determining the denoised user rating and removing the original user rating; and
- if there is no strong disagreement condition between the user ratings of the set, determining the denoised user rating.

As a result, only user ratings that have turned out to be unreliable are removed from the dataset and maximum information of the original dataset is retained in the denoising process. Preferably, the strong disagreement condition is determined to be present, if all user ratings of the set differ by more than a given threshold.

According to a still further embodiment of the invention, the denoised user rating is determined by the following steps:

- determining the difference between all possible pairs of user ratings of the set;
- creating a set of remaining user ratings composed of the values, which are closest to the average value of the rating scale, of all possible pairs of user ratings, which belong to a pair with a difference smaller than or equal to a given threshold;
- repeating the previous step if necessary until all possible pairs of user rating in the set of remaining user ratings have a difference smaller than or equal to the given threshold; and
- selecting as the denoised user rating the user rating, which is closest to the average value of the rating scale, out of the set of remaining user ratings.

So, "unreliable" user ratings are removed from the set of user ratings before selecting the denoised user rating.

According to an alternative embodiment, the denoised user rating is determined by the step of:

- selecting as the denoised user rating the user rating closest to the average value of the rating scale out of the user ratings of the set.

Empirical tests have shown that the selection of the "mildest rating" (i.e. the rating closest to the average of the rating scale) as the denoised user rating, as is done in these two embodiments, is a suitable strategy. The rationale behind the choice of the mildest rating is the following: given a user profile, milder ratings are the least informative and therefore they will have a small influence when deciding whether to recommend an item or not. In addition, they introduce the least amount of risk in terms of possible errors. Hence, whenever a disagreement is detected between the ratings within the set of user ratings, the rating that minimizes the risk of error is chosen. However, depending on the characteristics of the dataset under consideration, other ways of selecting the denoised user rating may also be suitable.

In a practical situation it may not be feasible to have all users re-rate all items, which they have previously rated. Therefore, strategies to select the optimal ratings to be re-rated are needed, in order to improve the method's accuracy with minimal intervention.

According to an embodiment, the items to be re-rated by a user are selected based on the value of the original user rating thereof. Preferably, only items with a value of the original user rating at both ends of the rating scale, i.e. with a value below a lower threshold value or a value over an upper threshold value, are selected to be re-rated by the user. At first sight, it might seem that mild ratings would be the preferred ratings to denoise, given that they are typically more inconsistent. However, the findings of an experimental analysis show the opposite: denoising extreme ratings yields larger performance gains than denoising mild ratings. This behavior might be due to several reasons, including that the contribution of extreme ratings to the final recommendation decisions is generally larger (both positively and negatively) than the contribution of mild ratings. Also, the RMSE measure, which is generally used to assess the quality of recommendation algorithms, penalizes large errors that are more likely to occur with extreme ratings. Therefore, errors associated to predicting extreme ratings are likely to impact RMSE more than errors associated with mild ratings.

Users are not equally consistent when providing their ratings, such that "noisy" data is typically generated by inconsistent or "noisy" users. For this reason, according to a still further embodiment, only users with an inconsistent rating pattern are requested to re-rate items. Thereto, out of a user group of users, who have previously rated items of the data set, the users with the N highest levels of inconsistency in their rating patterns may be requested to re-rate items, wherein N is an integer.

A simple and effective method to compute user inconsistencies and hence detecting noisy users, is to request all users to re-rate a number of items, which they have previously rated. The re-rating data is used to estimate the user's inconsistency.

Preferably, the method according to the invention is implemented by means of a computer program.

The proposed method is able to denoise rating datasets from re-rating data: i.e. by asking users to rate again previously rated items. The method yields significant improvements in the RMSE of standard recommender system algorithms. The method according to the present invention opens up a new avenue in explicit-feedback recommender systems that is complementary to one of the common approaches: instead of focusing on improving a recommender system algorithm and its response to a specific dataset, it has been shown that improving the quality of the original dataset via a denoising step yields significant performance gains in the most common collaborative filtering algorithms. In addition, the proposed approach is not intrusive to the user nor to the existing recommender algorithms or systems, as it simply adds re-ratings where appropriate.

According to a further aspect of the invention, a system is provided for removing noise from a dataset of user ratings for items, the dataset being usable for recommending items that may be of interest to users, the system being configured for performing the steps of the method defined herein above.

The system may be advantageously incorporated in a recommender system.

These and other aspects of the invention will be apparent from and elucidated with reference to the embodiments described hereinafter.

BRIEF DESCRIPTION OF THE DRAWINGS

The invention will be better understood and its numerous objects and advantages will become more apparent to those skilled in the art by reference to the following drawings, in conjunction with the accompanying specification, in which:

Figure 1 shows a flowchart of an algorithm for denoising a single user rating according to an exemplary embodiment of the invention.

Figure 2 shows a flowchart of a data dependent partial denoising algorithm according to an exemplary embodiment of the invention.

Figure 3 shows a flowchart of a user dependent partial denoising algorithm according to an exemplary embodiment of the invention.

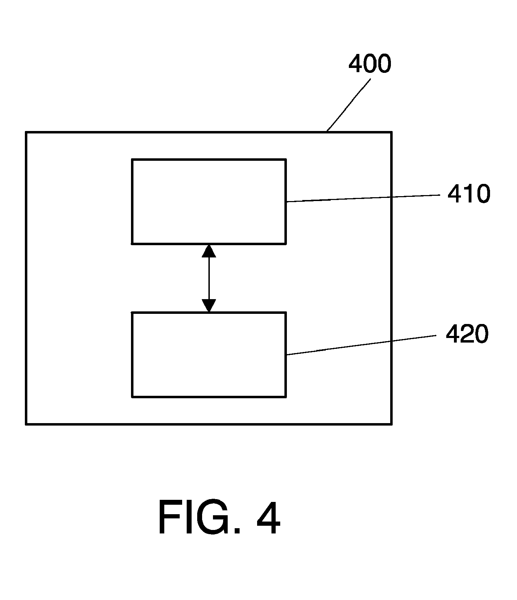

Figure 4 shows a block diagram of an exemplary system configured for implementing the algorithms shown in figures 1-3.

Throughout the figures like reference numerals refer to like elements.

DETAILED DESCRIPTION OF THE PRESENT INVENTION

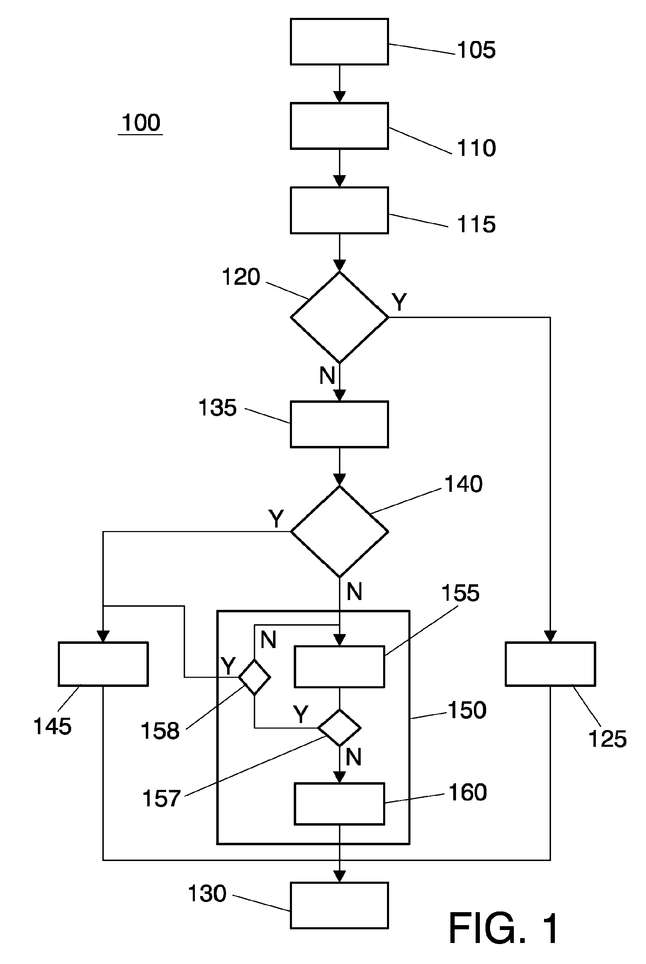

With reference to the flowcharts in figures 1, an exemplary embodiment will be described of the denoising algorithm 100 of the user rating of a given user for a single given item. Repetitions of a user rating (re-ratings) are exploited to remove some of the natural noise in the original dataset used by a recommender system and hence obtain better predictions. The proposed denoising algorithm is aimed at removing input noise while retaining maximum information in the dataset. Hence, there are imposed two conditions to be met by the algorithm:

- The algorithm shall produce a denoised version of the dataset that has as many ratings as possible (i.e. it should delete as few ratings as possible from the original dataset).
- The denoised dataset should always include one of the ratings provided by the user in one of the trials (i.e. the algorithm should not create new values of the user ratings but rather decide on which of the existing user ratings to trust).

After starting the algorithm (step 105), one or more user re-ratings for a given item are obtained (step 110). A set of user ratings of the given user for the item is created (step 115), which consists of the original user rating for the item and the one or more re-ratings obtained in step 110. Next, it is determined if there is agreement between all ratings belonging to a given item and user, i.e. if all ratings of the set are the same (step 120). If this is true, the algorithm returns that rating as the denoised user rating (step 125) and is ended (step 130). If this is not the case, the distances between all possible pairs of user ratings are calculated (step 135) and it is determined if all pairs of user ratings of the set differ by more than a given threshold (step 140). If this is the case, there is a strong disagreement condition. This is an indication that neither the original user rating given by the user for the item nor the re-rating(s) are reliable. The original user rating is then deleted from the dataset (step 145) and the algorithm is ended. Finally, if at least two ratings differ by less than the given threshold value, there is a mild disagreement condition. In this case one of the user ratings from the set of user ratings is selected as the de-noised user rating (step 150). This may be done by first creating a set of remaining user ratings composed of the values, which are closest to the average value of the rating scale, of all possible pairs of user ratings with a difference smaller than or equal to a given threshold (step 155). It is then checked if there are still any pairs of user ratings in the set of remaining user ratings with a difference larger than the given threshold (step 157). If this is the case, it is determined if all remaining pairs of user ratings of the set differ by more than a given threshold (step 158). If this is the case, there is a strong disagreement condition. If this is not the case (i.e. at least some of the remaining pairs of user ratings differ by a value less than or equal to the threshold) step 155 is repeated. Once all pairs of ratings in the set of remaining user ratings have a difference smaller than or equal to the given threshold, the user rating closest to the average value of the rating scale (step 160), i.e. the "mildest" rating, is taken from the set remaining user ratings.

A mathematical description of steps 155, 157, 158 and 160 of the case for t re-rates is as follows (algorithm 1):

---

**Algorithm 1 Denoising ('D) a t-source re-Rated item**

Input: $R_i(u, m) = \{r_0, ..., r_t\}$ – set of ratings of user u on item m (original rating plus t re-ratings)
Input: $\gamma$ - threshold of noise
Output: $r_d$ – de – noised rating
*Function* 'D: $(R_i(u, m) = \{r_0, ..., r_t\}, \gamma) \rightarrow r_d$
$S = \{ \mathcal{M}(\{a, b\})\} \mid a \in R_i(u,m) \wedge b \in R_i(u,m) \wedge a \neq b \wedge |a - b| \leq \gamma$
 - Create a reduced set S composed of the mildest value of all possible pairs of ratings
in $R_i(u,m)$ s.t. $|a - b| \leq \gamma$
if $\exists a, b \in S$ s.t. $|a - b| > \gamma$ then
    return 'D $(S, \gamma)$ – apply recursively if there is at least one pair with $|a - b| > \gamma$
else
    return $\mathcal{M}(S)$
end if

---

So, the algorithm receives the set of $t+1$ ratings that a user has given to a given item -- i.e. original rating plus $t$ re-ratings - and returns a single denoised rating r. The denoised rating is obtained by first determining the reduced set S of ratings. This set consists of all "mildest values" (i.e. values closest to the average of the rating scale) of rating pairs ($\{a,b\}$) whose distance is smaller to or equal than threshold y. This step is repeated as long as there are any pairs in the reduced set S with a difference larger than threshold $Y$.

Then out of this reduced set S of ratings, again the mildest value is determined. In order to obtain the mildest rating of a set, the function $M$ is defined, which is applied to a set of ratings $R_i(u,m)$ and which returns the rating $r$ that is closest in value to the average of the rating scale.

$$\text{Formally, } \mathcal{M} : R_i(u,m) = \{r_1,...,r_t\} \rightarrow r$$
$$r \in R_i(u,m) \text{ s.t. } |r-\sigma| \leq |r'-\sigma| \ \forall \ r' \in R_i(u,m)$$

where $\sigma = 1/N \sum_{i=1...N} r^*_j$ and $R^* = r^*_1,...,r^*_N$ is the numerical rating scale of choice (*e.g.* $R^* = \{1,2,3,4,5\}$).

It should be noted that the mildest rating function applied to an empty set returns a non-determined value, $M(\emptyset) = IND$

Although Algorithm 1 can be applied with $t$ re-rates, it is not realistic to expect having items that are re-rated many times by the same user. Therefore, a case of particular interest is that one wherein users re-rate items only once (one-source re-rating). A mathematical description of steps 120-160 of the case for a single re-rate is as follows (algorithm 2):

---

**Algorithm 2 Denoising based on one-source re-rating**

Given user u, item m, and threshold $\gamma > 0$
$r_1(u, m)$ original rating for user u and item m)
$r_2(u, m)$ re-rating for user u and item m)
$r_d(u, m)$ output denoised rating user u and item m)
if $r_1(u, m) = r_2(u, m)$ then
    $r_d(u, m) = r_1(u, m)$
    we do nothing, we keep rating as valid)
else if $0 < |r_1(u, m) - r_2(u, m)| > \gamma$ then
    $r_d(u, m) = 0$ (we delete rating: Strong Disagreement)
else
    $0 < |r_1(u, m) - r_2(u, m)| < \gamma$ (Mild Disagreement: ratings in both trials differs by less than a given threshold $\gamma$)
    $r_d(u, m) = \mathcal{M} r_1(u, m), r_2(u, m))$ (where $\mathcal{M}$ is defined herein above)
end if

---

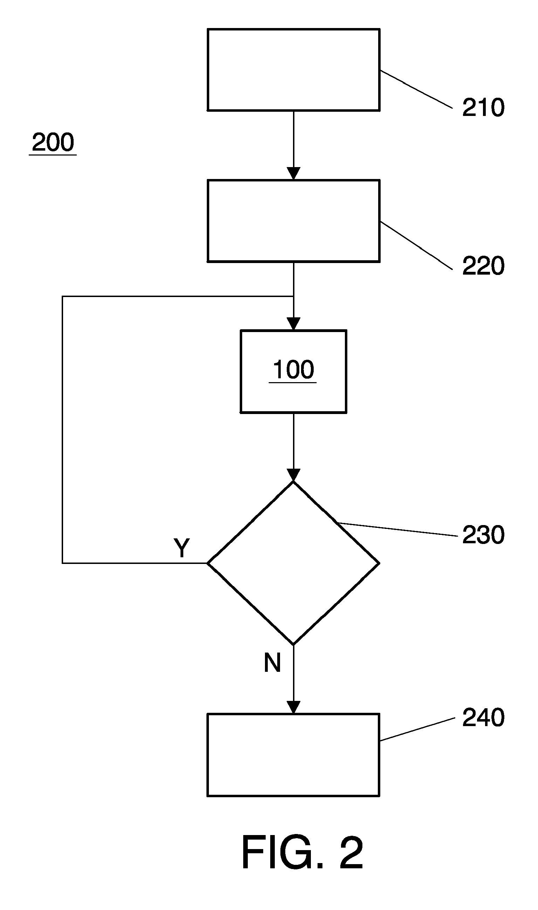

It is unrealistic to expect users to provide feedback about all items more than once. Therefore, a practical setting consists in denoising only selected ratings. An exemplary embodiment of such a data dependent partial denoising algorithm 200 is shown in figure 2. After starting the algorithm (step 210), the items are selected for which a denoised user rating from the user is to be computed (step 220). Then for the first item of the selected items the denoised user rating is determined according to algorithm 100, which has been described herein above with reference to figure 1. Then it is determined if there are any selected items left for which the denoised user rating has not yet been determined (step 230). If this is the case, the algorithm loops back and the denoised user rating for the next selected item is determined, etc. When the denoised user rating for all selected items has been calculated, the algorithm is ended (step 240).

The selection of the items for denoising is based on the original rating value. Items with original user rating values at both ends of the rating scale, i.e. with a value below a lower threshold value or a value over an upper threshold value are selected for denoising. It can be mathematically shown that larger performance gains are obtained by denoising items with an extreme value of their original user rating than by denoising items with "mild" original user ratings.

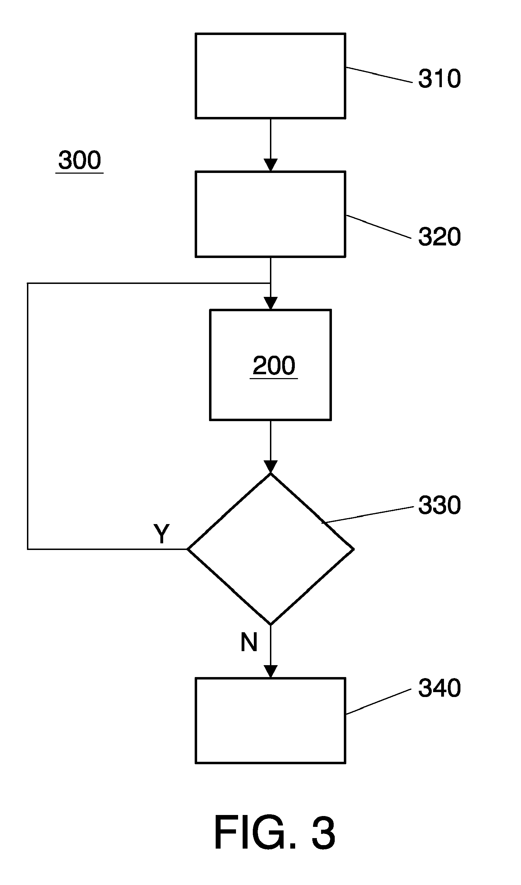

As users are not equally consistent when providing their ratings, noisy data is typically generated by inconsistent users. Therefore, it makes sense to only request inconsistent or unstable users to re-rate past ratings for items. Such a data and user dependent denoising algorithm 300 is depicted in figure 3. After starting the algorithm (step 310), the inconsistent users are selected (step 320). This may be done by selecting all users in a dataset that have at least certain level of incosistency -noisiness—in their ratings. Alternatively, the N users with the highest levels of inconsistency in their ratings are selected from a user group. Then for the first user of the selected users the items that should be denoised are selected according to algorithm 200, which has been described herein above with reference to figure 2. Then it is determined if there are any selected users left for which the items to be denoised have not yet been determined (step 330). If this is the case, the algorithm loops back and the items to be denoised for the next user are determined, etc. When the items to be denoised for all selected users have been determined, the algorithm is ended (step 340). So, the previously explained data-dependent denoising algorithm 200 is only applied to the ratings coming from "noisy" users.

In order to compute user inconsistencies and hence detecting noisy users, in a practical setting, an incremental approach can be applied where all users are asked to re-rate a small number of items and this re-rating data is used to estimate their noisiness.

The functionality shown in figures 1-3 is preferably implemented by means of a suitable computer program loaded to the associated memory 420 of a processor 410, incorporated in a recommender system 400.

While the invention has been illustrated and described in detail in the drawings and foregoing description, such illustration and description are to be considered illustrative or exemplary and not restrictive; the invention is not limited to the disclosed embodiments.

In this regard it is to be noted that, instead of selecting one of the user ratings of the set of user ratings as the denoised user rating (see steps 150, 155 and 160 of figure 1), the average value of all user ratings in the set can be used as denoised user rating. Furthermore, step 155 of figure 1 may be omitted and the denoised user rating may be selected in step 160 from the complete set of user ratings (i.e. the original rating and all re-ratings).

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. Method of removing noise from a dataset of user ratings for items, the dataset being usable for recommending items that may be of interest to users, the method comprising the following steps:

   - for at least some of the items previously rated by a user with an original user rating, obtaining one or more user re-ratings of the user (110); and
   - determining a denoised user rating for an item (150) based on a set of user ratings provided by the user for the item, the set comprising the one or more user re-ratings and the original user rating.

2. Method according to claim 1 wherein one of the user ratings from the set of user ratings provided by the user for an item is selected (160) as the denoised user rating for said item.

3. Method according to claim 1 or 2 comprising the further steps of:

   - determining a disagreement condition (140) of the set of user ratings for an item,
   - if there is a strong disagreement condition between the user ratings of the set, refraining from determining the denoised user rating and removing the original user rating (145); and
   - if there is no strong disagreement condition between the user ratings of the set, determining the denoised user rating (150).

4. Method according to claim 3 wherein the strong disagreement condition is determined to be present, if all user ratings of the set differ by more than a given threshold.

5. Method according to any one of the claims 1-4 wherein the denoised user rating is determined by the following steps:

   - determining the difference between all possible pairs of user ratings of the set;
   - creating a set of remaining user ratings (155) composed of the values, which are closest to the average value of the rating scale, of all possible pairs of user ratings with a difference smaller than or equal to a given threshold;
   - repeating the previous step if necessary until all possible pairs of user rating in the set of remaining user ratings have a difference smaller than or equal to the given threshold and
   - selecting the user rating (160) closest to the average value of the rating scale out of the set of remaining user ratings as the denoised user rating.

6. Method according to any of the claims 1-4 wherein the denoised user rating is determined by the step of:

   - selecting the user rating closest to the average value of the rating scale out of the user ratings of the set as the denoised user rating.

7. Method according to any one of the claims 1-6 wherein items to be re-rated by a user are selected (220) based on the value of the original user rating thereof.

8. Method according to claim 7 wherein only items with a value of the original user rating at both ends of the rating scale, i.e. with a value below a lower threshold value or a value over an upper threshold value, are selected to be re-rated by the user.

9. Method according to any one of the claims 1-8, wherein only users with an inconsistent rating pattern are requested to re-rate items.

10. Method according to claim 9, wherein out of a user group of users, who have previously rated items of the data set, the users with the N highest levels of inconsistency in their rating patterns are requested to re-rate items, wherein N is an integer.

11. Method according to claim 9 or 10, wherein in order to determine which users have an inconsistent rating pattern users are requested to re-rate a number of items, which they have previously rated, and the re-rating data is used to estimate their inconsistency.

12. A computer program comprising computer program code means adapted to perform the steps according to any one of claims 1-11 when said program is run on a computer.

13. A system for removing noise from a dataset of user ratings for items, the dataset being usable for recommending items that may be of interest to users, the system being configured for performing the steps of any one of claims 1-11.

14. System according to claim 13, wherein the system is a recommender system (400) for recommending items that may be of interest to users.

FIG. 1

**FIG. 2**

FIG. 3

400

410

420

FIG. 4

Europäisches
Patentamt

European
Patent Office

Office européen
des brevets

**EUROPEAN SEARCH REPORT**

Application Number

EP 09 38 2209

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités" JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525 ISSN: 0170-9291 * The claimed subject-matter, with due regard to the description and drawings in accordance with Article 92 EPC, relates to processes comprised in the list of subject-matter and activities excluded from patentability under Article 52(2) and (3) EPC. The information technology employed as an enabler for carrying out said processes is conventional. Its use for carrying out non-technical processes forms part of common general knowledge and it was widely available to everyone at the date of filing of the present application. No documentary evidence is therefore considered necessary. * ----- | 1-14 | INV. G06Q30/00 |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 24 February 2010 | Bohner, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

&: member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. Adomavicius ; A. Tuzhilin.** Toward the next generation of recommender systems: A survey of the state-of-the-art and possible extensions. *IEEE Trans. on Knowledge and Data Engineering,* 2005, vol. 17 (6), 734-749
- **D. W. Oard ; J. Kim.** Implicit feedback for recommender systems. *AAAI Works. on Rec. Sys.,* 1998
- **M. Harper ; X. Li ; Y. Chen ; J. Konstan.** An economic model of user rating in an online recommender system. *Proc. of UM 05,* 2005
- **J. Bennet ; S. Lanning.** The netflix prize. *Proc. of KDD Work. on Large-scale Rec.. Sys.,* 2007
- **X. Amatriain ; J. Pujol ; N. Oliver.** I like it... i like it not: Evaluating user ratings noise in recommender systems. *Proc. of UMAP'09,* 2009
- **J. L. Herlocker ; J. A. Konstan ; L. G. Terveen ; J. T. Riedl.** Evaluating collaborative filtering recommender systems. *ACM Trans. on Inf. Syst.,* 2004, vol. 22 (1), 5-53
- **M. Mahony ; N. Hurley ; G. Silvestre.** Detecting noise in recommender system databases. *Proceedings of the 2006 IUI,* 2006
- **J. Ford S. Zhang ; Y. Ouyang ; F. Makedon.** Analysis of a low-dimensional linear model under recommendation attacks. *Proc. of SIGIR '06,* 2006
- **B. Mehta ; W. Nejdl.** Attack resistant collaborative filtering. *Proc. of SIGIR '08,* 2008
- **X. Amatriain ; J. Pujol ; N. Oliver.** *I like it... i like it not: Evaluating user ratings noise in recommender systems*